**Europäisches Patentamt**

**European Patent Office**

**Office européen des brevets**

(19)

(11) Veröffentlichungsnummer : **0 396 905 B1**

# (12) EUROPÄISCHE PATENTSCHRIFT

(45) Veröffentlichungstag der Patentschrift :
**30.12.92 Patentblatt 92/53**

(51) Int. Cl.$^5$ : **F16L 9/19, F16L 3/01, F16L 39/04, F16L 51/00**

(21) Anmeldenummer : **90106465.9**

(22) Anmeldetag : **04.04.90**

(54) **Verbindungsmuffe für Mehrfachrohrverbindungen und entsprechendes Mehrfachrohr.**

(30) Priorität : **08.05.89 CH 1728/89**

(43) Veröffentlichungstag der Anmeldung :
**14.11.90 Patentblatt 90/46**

(45) Bekanntmachung des Hinweises auf die
Patenterteilung :
**30.12.92 Patentblatt 92/53**

(84) Benannte Vertragsstaaten :
**AT BE DE DK ES FR GB GR IT NL**

(56) Entgegenhaltungen :
**EP-A- 0 057 742**
**DE-A- 2 257 441**

(73) Patentinhaber : **Jansen AG**
**Industriestrasse**
**CH-9463 Oberriet (CH)**

(72) Erfinder : **Herrsche, Walter**
**Feldhofstrasse 14**
**CH-9463 Oberriet (CH)**

(74) Vertreter : **Blum, Rudolf Emil Ernst et al**
**c/o E. Blum & Co Patentanwälte Vorderberg 11**
**CH-8044 Zürich (CH)**

EP 0 396 905 B1

## Beschreibung

Die Erfindung betrifft eine Verbindungsmuffe aus Kunststoff für die Erstellung mehrerer, paralleler Rohrverbindungen, die mehrere rohrartige, beabstandete Durchgänge bildet.

Solche Verbindungsmuffen sind einerseits in der Art von Schrumpfmuffen ausgebildet worden (vgl. EP-A-0 057 742), welche schwierig zu montieren sind, indem sie die dosierte Aufbringung von Wärme verlangen und keine Rohrdilatationen aufnehmen. Anderseits sind Verbindungsmuffen bekannt, die aus zwei Halbschalen bestehen. Sollen solche Muffen Rohrdilatationen aufnehmen, ergeben sich Probleme mit der Abdichtung der Rohre. Zudem ist auch die Dichtung zwischen den zwei Halbschalen aufwendig.

Es stellt sich damit die Aufgabe, eine neue Verbindungsmuffe zu schaffen, welche bei einfacher Ausgestaltung und Handhabung dazu geeignet ist, Mehrfachrohre gut dichtend zu verbinden und dabei Rohrdilatationen aufzunehmen.

Diese Aufgabe ist mit den Merkmalen von Anspruch 1 gelöst.

Wie sich daraus ergibt, besitzt die Verbindungsmuffe für jede einzelne Rohrverbindung einen eigenen Durchgang, welcher im Bereich seiner Eintrittsöffnungen mittels eines Dichtungsrings gegenüber jedem Einzelrohr abgedichtet ist. Damit kann eine aufwendige Dichtung für die Gesamtheit der Mehrfachrohre vermieden werden. Insbesondere vorteilhaft ist die Ausgestaltung, bei welcher die Muffe für jeden der Durchgänge ein Rohrstück aufweist, wobei die Rohrstücke beidseitig je mittels eines Endstücks miteinander verbunden sind, in welchem die Eintrittsöffnungen für die Rohre gebildet sind. Die einzelnen Stücke lassen sich auf diese Weise separat spritzpressen und danach zusammenfügen. Die Dichtungsringe dienen dabei mit Vorteil zugleich auch zur Dichtung der Verbindungsstellen zwischen den Rohrstücken und den Endstücken, welche vorzugsweise mit einer Einrastkupplung verbunden sind. Da die Nuten für die Dichtungsringe damit gerade zwischen den separat spritzgepressten Stücken ausgebildet sind, erübrigt sich eine Zusatzbearbeitung für die Nuten, welche mit Spritzpressen sonst nicht erzeugbar sind. Ferner besitzen die Endstücke zwischen den Eintrittsöffnungen mit Vorteil Aufnahmeschlitze für die Stege der Mehrfachrohre, welche in diese Schlitze eingeführt und darin fixiert werden können. Damit lässt sich die Verbindungsmuffe auf einfache Art einseitig an einem Mehrfachrohr fixieren, während das Ende des anderen Mehrfachrohrs sich zur Aufnahme der Rohrdilatation unter Aufrechterhaltung der Dichtung in der Muffe verschieben kann.

Nachfolgend werden weitere Eigenschaften der erfindungsgemässen Verbindungsmuffe sowie des entsprechenden Mehrfachrohrs anhand von Ausführungsbeispielen beschrieben, die in der Zeichnung dargestellt sind. Es zeigen:

Fig. 1 eine Aufsicht auf eine Verbindungsmuffe für ein Dreifachrohr;

Fig. 2 eine axiale Ansicht dieser Verbindungsmuffe;

Fig. 3 eine Aufsicht gemäss Fig. 1 mit eingeschobenem Dreifachrohr;

Fig. 4 eine Schnittansicht entlang der Linie IV-IV in Fig. 1;

Fig. 5 eine entsprechende Schnittansicht mit eingeschobenen Mehrfachrohrenden;

Fig. 6 bis 8 drei Stufen bei der Bildung einer Rohrverbindung;

Fig. 9 eine Seitenansicht einer Zusammenziehvorrichtung;

Fig. 10 diese Zusammenziehvorrichtung in Zusammenwirkung mit einer Verbindungsmuffe bzw. einem MehrfachrohrEnde, und

Fig. 11 eine Untersicht auf die Rohrverbindung von Fig. 10 beim Zusammenziehen.

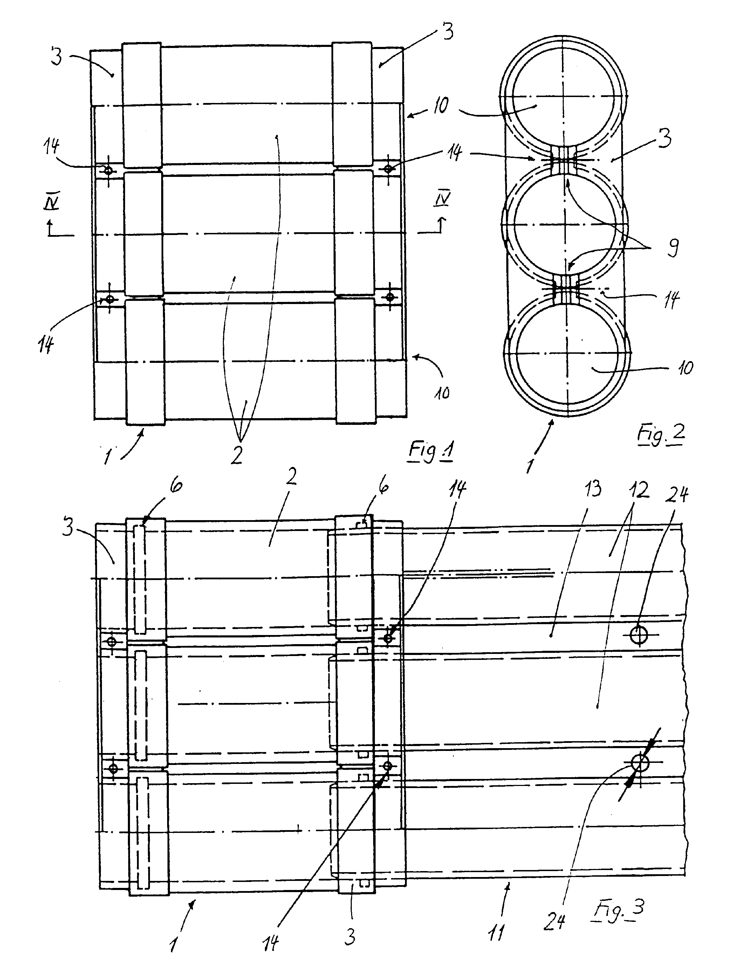

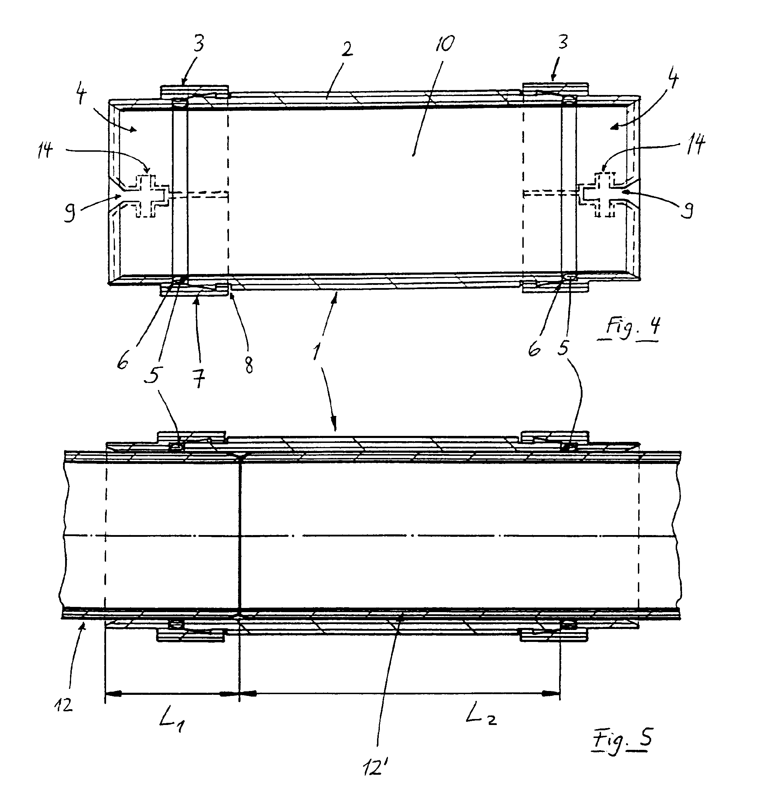

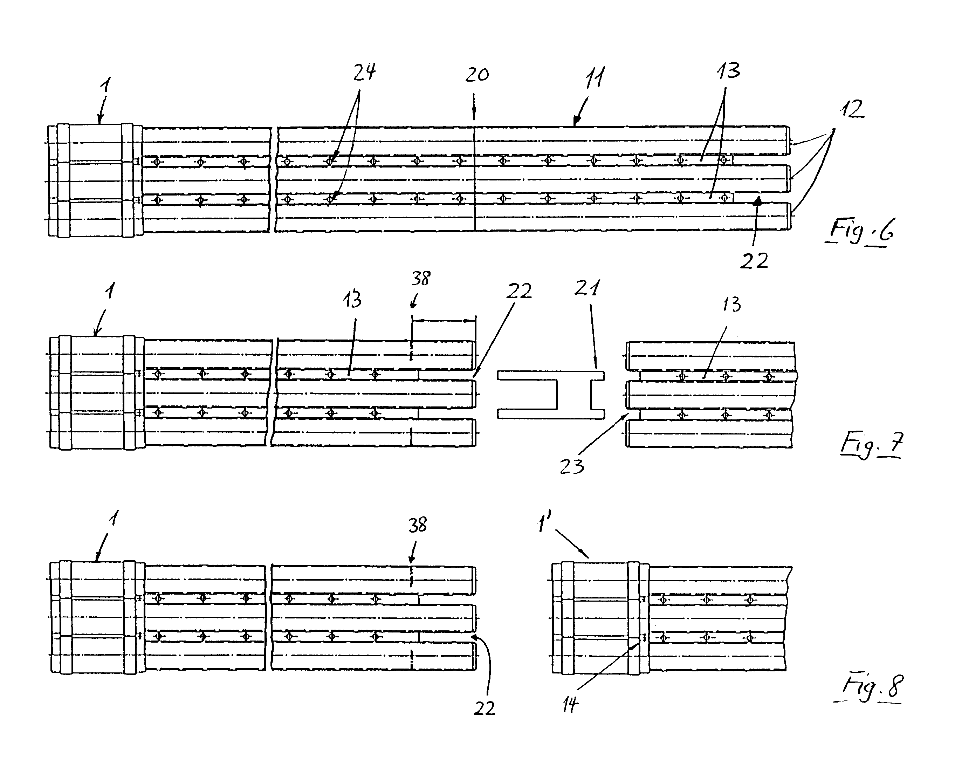

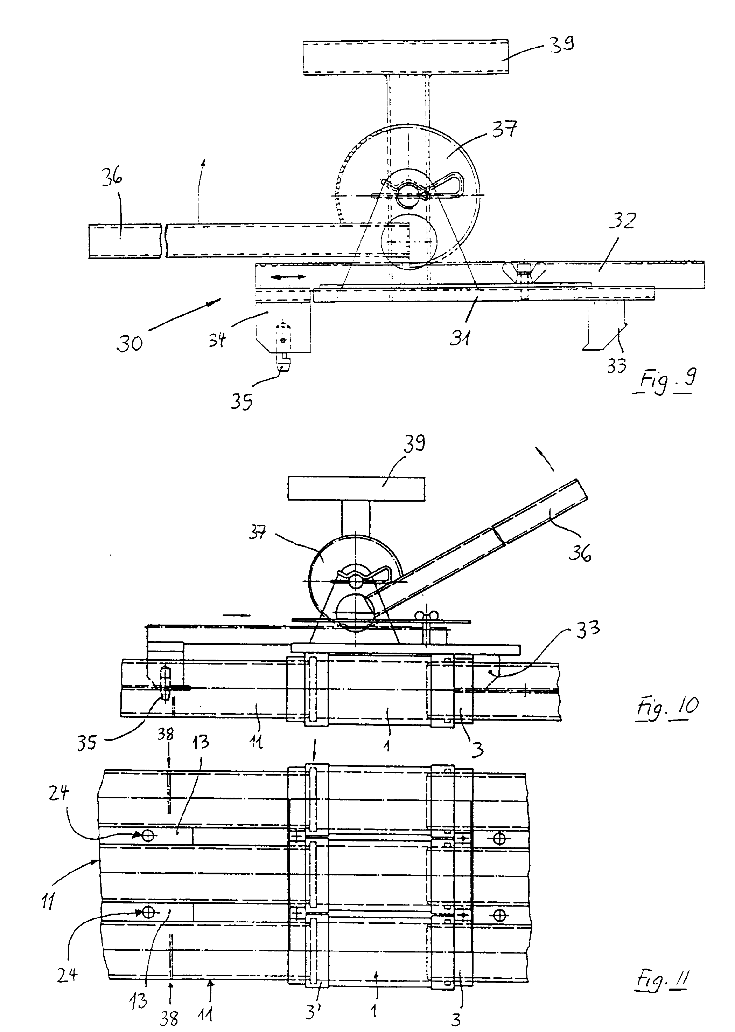

Zunächst soll anhand der Figuren 1,2 und 4 der Aufbau einer Verbindungsmuffe 1 gemäss der Erfindung erläutert werden. Im vorliegenden Beispiel handelt es sich, wie aus Fig. 1 und 2 ersichtlich ist, um eine Dreifachverbindung. Die dargestellte Verbindungsmuffe besitzt für jede Rohrverbindung einen Durchgang 10, welcher zwei zu verbindende Rohrenden aufnimmt. Jeder Durchgang 10 ist durch ein Rohrstück 2 gebildet. Die Rohrstücke 2 sind beidseitig je durch ein Endstück 3 miteinander verbunden, welche die Eintrittsöffnungen 4 der Durchgänge 10 bilden (vgl. Fig. 4). Im Bereich der Eintrittsöffnungen ist je eine Ringnut 6 vorgesehen, in welche ein Dichtungsring 5 aus relativ weichem Gummi (ca. 60 shore) eingelegt ist. Wie insbesondere aus Fig. 4 ersichtlich ist, wird die Nut 6 zwischen dem Endstück 3 und dem jeweiligen Rohrstück 2 durch entsprechende Vorsprünge an diesen Teilen gebildet. Dies gestattet es, die Nut 6 ohne zusätzliche Bearbeitung, wie Fräsen etc. im Innern der Durchgänge 10 anzuordnen. Dabei sind sowohl die Rohrstücke 2 als auch die Endstücke 3 als Spritzpressteile ausgebildet, die mittels einer Kupplung 7 einfach zu verbinden sind. Die Kupplung 7 ist als eine Art Einrastkupplung ausgebildet, indem sich die Endstücke 3 beim Zusammenfügen über die Rohrstücke elastisch aufweiten und in eine aussen an den Rohrstücken vorgesehene Vertiefung 8 einrasten. Zwischen den Enden der Rohrstücke 2 und den Endstücken 3 bildet sich dann die Ringnut 6, in welche der Dichtring 5 eingelegt wird, dessen Funktion noch näher erläutert wird.

Zwischen den Durchgängen 10 für die Rohrenden der zu verbindenden Mehrfachrohre sind an den Endstücken 3 Aufnahmeschlitze 9 vorgesehen. Die zu verbindenden Mehrfachrohre 11 bestehen, wie insbesondere in Figur 3 in Aufsicht gezeigt ist, aus mehreren Einzelrohren 12, welche über Stege 13 miteinander verbunden sind. Die erwähnten Schlitze 9 dienen nun zur Aufnahme dieser Stege 13 in den Endstücken 3 der Verbindungsmuffe. An den Endstücken sind an dieser Stelle Oeffnungen 14 zum Einführen von Spannstiften oder dergl. vorgesehen, welche durch die Stege 13 hindurch gestossen werden und damit eine zugfeste Verbindung zwischen der Verbindungsmuffe und einem der Mehrfachrohre 11 bilden.

In Fig. 3 ist ein derart in einer Verbindungsmuffe 2 eingeführtes, mit den Stegen 13 zugfest darin fixiertes Mehrfachrohr 11 in Aufsicht dargestellt.

In der Regel wird jeweils nur eines der beiden zu verbindenden Mehrfachrohre 11 auf diese Weise an der Verbindungsmuffe fixiert, während das andere darin für die Aufnahme der Rohrdilatation verschiebbar bleibt. In Fig. 5 ist eine derartige Situation in einem Schnitt durch zusammengehörige Einzelrohre 12,12' der beiden zu verbindenden Mehrfachrohre gezeigt. Das in Fig. 5 linke Rohr 12 ist dabei in der Verbindungsmuffe fixiert, wie oben beschrieben, während das rechte Rohr 12' darin verschieblich bleibt. Das fixierte Mehrfachrohr ist um eine Länge Ll in die Verbindungsmuffe eingeschoben, d.h. ragt nur relativ wenig über die Dichtung 5 hinaus. Für das andere, freie Mehrfachrohr steht damit als Dilatationsstrecke die restliche Länge L2 bis zur anderen Dichtung 5 zur Verfügung. Bei einer konkreten Ausführung kann die Länge Ll ca. 5 cm, die Länge L2 der Dilatationsstrecke ca. 12 cm betragen. Damit steht eine ausreichende Strecke zur Aufnahme der Längendilatation von Mehrfachrohren einer Gesamtlänge von 10 m Länge zur Verfügung, die durch Temperaturdifferenzen insbesondere zwischen der Montage und dem verlegten, zugedeckten Zustand auftreten.

Die Dichtungsringe 5 haben die Funktion, das Eindringen von Feuchtigkeit in den Bereich zwischen die beiden zu verbindenden Mehrfachrohre 12, 12' zu verhindern.

Da die Dichtungen 5 satt an der glatten Aussenseite jedes Einzelrohres 12,12' der Mehrfachrohre anliegt, verhindern sie, dass durch die Fuge zwischen der Verbindungsmuffe und den Rohr-Aussenseiten Feuchtigkeit eintritt. Da die Schlitze 9 für das Fixieren der Mehrfachrohr-Stege 13 nicht bis zu den Dichtungen 5 reichen (vgl. Fig. 4), liegen diese rundum an jedem der Einzelrohre 12,12' an. Die Dichtungen 5 dienen gleichzeitig auch als Abdichtung der Verbindungsstellen zwischen den Endstücken 2 und den Rohrstücken 3, aus welchen die Verbindungsmuffe zusammengesetzt ist (vgl. Fig. 5), so dass auch durch jene Fuge keine Feuchtigkeit zwischen die Mehrfachrohre gelangen kann.

Das Vorgehen beim Verbinden zweier Mehrfachrohre mit der erfindungsgemässen Muffe ist in den Figuren 6 bis 8 schematisch dargestellt. Fig. 6 zeigt den Ausgangszustand, in welchem an einer Seite eines z.B. 10 m langen Mehrfachrohrs 11 eine Verbindungsmuffe 1 bereits fix montiert ist, wie vorstehend beschrieben. In dieser Form werden die Mehrfachrohre z.B. auf die Baustelle geliefert.

Sollen mehrere solche Mehrfachrohre 11 miteinander verbunden werden, so reicht es aus, das Ende des einen Mehrfachrohrs in die vormontierte Verbindungsmuffe am anderen Mehrfachrohr einzuschieben. Damit die Dilatationsstrecke in der Muffe zur Verfügung steht, wurden die Stege 13 im Bereich des Endes jedes Mehrfachrohrs über eine entsprechende Länge entfernt, so dass am Rohrende stegfreie Bereiche 22 bestehen. Soll nun das Mehrfachrohr 11 gekürzt werden, so wird es zunächst an der gewünschten Trennstelle 20 getrennt (Fig. 6). Mittels einer Lehre 21 wird markiert, wie weit die Stege 13 an den beiden Abschnitten zu entfernen sind. Bei einem Ende ist dies wiederum die für ausreichende Dilatation nötige Länge, während beim anderen Ende nur ein kurzes Stegstück 23 entfernt wird (Fig. 7). Dieses Ende wird mit einer weiteren Verbindungsmuffe 1' bestückt, und durch Einführen von Spannstiften bei den Oeffnungen 14 aus Endstück der Verbindungsmuffe 1' fixiert (Fig. 8).

Damit liegen im Ergebnis zwei Mehrfachrohrstücke vor, die beide an einem Ende mit einer fixierten Verbindungsmuffe 1,1' versehen sind und am anderen Ende stegfreie Bereiche 22 besitzen, welche beim Einschieben in eine weitere Verbindungsmuffe eine Rohrdilatation aufnehmen.

Selbstverständlich können je nach Anwendungsfall auch beide mit einer Verbindungsmuffe zu verbindenden Mehrfachrohrenden daran fixiert oder darin frei gleitbar sein. Ferner kann die Verbindungsmuffe 1 auch mit mehreren Einzelrohren verwendet werden, die nicht über Stege verbunden sind. Dieser Fall liegt etwa bei in Kurven mit engen Radien zu verlegenden Rohren vor. Da das Mehrfachrohr 11 mit den Stegen keine solche Krümmungen zulässt, können für solche Stellen Einzelrohre zwischen zwei Muffen verlegt werden. Die beschriebene Muffenausgestaltung hat dabei den Vorteil, dass auch solche Einzelrohre ohne Vornahme von Aenderungen gut dichtend aufgenommen werden können.

Wie aus Fig. 3 sowie den Figuren 6 bis 8 ersichtlich ist, besitzen die Stege 13 der Mehrfachrohre 11 in regelmässigen Abständen (z.B. je 10 cm) Löcher 24. Diese werden beim Extrudieren des Mehrfachrohrs in-line ausgestanzt und dienen mehreren Zwecken zugleich. Bei verlegten Mehrfachrohren wirken sie als Drainageöffnungen, um Wasseransammlungen im Bereich zwischen den einzelnen Rohren zu verhindern. Dies ist insbesondere im Bereich der Muffen von Bedeutung. Die Löcher 24 verhindern aber auch, dass vor dem Verlegen bei gelagerten Mehrfach- rohren solche Wasseransammlungen nicht entstehen, die insbesondere bei der Handhabung der Rohre stören würde. Werden die Mehrfachrohre in ein Sandbett verlegt, so kann feiner Sand durch die Löcher 24 eindringen und den Hohlraum unter den Stegen 13 füllen, womit die Verankerung der Mehrfachrohre im Boden verbessert wird. Dies kann auch dadurch erreicht werden, dass entsprechende Erdanker durch die Löcher eingeschlagen werden.

Schliesslich dienen die Löcher 24 auch als Hilfsmittel für das Einschieben der Mehrfachrohre 11 in die Verbindungsmuffe 1. Um eine gute Dichtung zu erzielen, ist der Einschiebewiderstand über den Dichtungsring 5 relativ gross. Aus diesem Grund ist zur Montage eine mechanische Zusammenziehvorrichtung 30 vorgesehen, wie in den Figuren 9 bis 11 gezeigt. Diese besteht im wesentlichen aus einer Grundplatte 31 mit Traggriff 39, auf der eine Zahnstange 32 verschiebbar gelagert ist. An der Grundplatte sind nebeneinander zwei Anschlagnocken 33 befestigt, mittels welcher die Vorrichtung am Endstück einer Muffe 1 abstützbar ist (Fig. 10). An der Zahnstange anderseits sind an einem Bügel 34 zwei Zapfen 35 angeordnet, die in zwei nebeneinander liegende Löcher 24 in den Stegen 13 des Mehrfachrohrs eingeführt werden (Fig. 10,11). Ueber einen Betätigungshebel 36 und ein daran befestigtes Ritzel 37 kann die Zahnstange 32 eingefahren werden, womit das Mehrfachrohr 11 in die Verbindungsmuffe 1 eingeschoben wird. Für die Demontage wird entsprechend vorgegangen, wobei nun die Anschlagsnocken 33 am anderen Endstück 3′ angesetzt werden. Um die korrekte Einschublänge zu erreichen, kann am Ende des einzuschiebenden Mehrfachrohrs 11 eine entsprechende Markierung 38 angebracht werden (vgl. auch Fig. 7,8).

Die für ein Dreifachrohr beschriebene Verbindungsmuffe kann in einfacher Weise für Mehrfachrohre mit einer kleineren oder grösseren Anzahl von Rohren abgewandelt werden. Insbesondere können dabei dieselben Rohrstücke 2, Dichtungen 5 und Montagevorrichtungen verwendet werden. Im wesentlichen sind nur die Endstücke 3 durch solche mit weniger oder mehr Eintrittsöffnungen 4 auszutauschen.

Die beschriebene Muffe zeichnet sich aus durch einfache Herstellung aus Kunststoff-Spritzpressteilen, durch einfache Montage und dennoch sehr gute Dichtung bei unterschiedlichen Anwendungen mit mehreren Einzelrohren oder einem Mehrfachrohr. Insbesondere in Verbindung mit den beschriebenen Mehrfachrohren bietet sich damit ein leicht verlegbares Rohrsystem zum Einziehen von elektrischen Kabeln oder Lichtleitern.

**Patentansprüche**

1. Verbindungsmuffe aus Kunststoff für die Erstellung mehrerer paralleler Rohrverbindungen, die mehrere rohrartige, beabstandete Durchgänge (10) bildet, dadurch gekennzeichnet, dass in jeden Durchgang (10) zwei miteinander zu verbindende Rohrenden jeder Rohrverbindung einschiebbar sind, wobei beidseitig im Bereich der Eintrittsöffnung jedes Durchgangs an seiner Innenwand eine umlaufende Nut (6) mit Dichtungsring (5) angeordnet ist, der mit der Rohraussenseite der zu verbindenden Rohre dichtend zusammen wirkt.

2. Verbindungsmuffe nach Anspruch 1, dadurch gekennzeichnet, dass jeder der mehreren Durchgänge (10) ein Rohrstück (2) aufweist, wobei die Rohrstücke (2) auf jeder Seite mittels einem Endstück (3) miteinander verbunden sind, das auf der jeweiligen Seite die Eintrittsöffnungen bildet, welche mit dem Innern der Rohrstücke fluchten.

3. Verbindungsmuffe nach Anspruch 2, dadurch gekennzeichnet, dass die umlaufende Nut (6) jeweils zwischen dem Ende jedes Rohrstücks (2) und dem entsprechenden Endstück (3) ausgebildet ist.

4. Verbindungsmuffe nach einem der Ansprüche 2 und 3, dadurch gekennzeichnet, dass die Rohrstücke (2) und die Endstücke (3) als separat herstellbare Spritzpressteile ausgebildet sind, wobei zur Befestigung der Rohrstücke an den Endstücken eine Einrastkupplung (7) vorgesehen ist.

5. Verbindungsmuffe nach Anspruch 3 und 4, dadurch gekennzeichnet, dass der Dichtungsring (5) im Bereich der Einrastkupplung (7) angeordnet ist und eine Dichtung der Verbindung zwischen Rohrstücken (2) und Endstücken (3) bildet.

6. Verbindungsmuffe nach einem der vorangehenden Ansprüche, zum Verbinden von Mehrfachrohren (11), an denen jeweils benachbarte Einzelrohre (12) in ihrer Mittelebene mittels in Rohrlängsrichtung verlaufenden Stegen (13) verbunden sind, dadurch gekennzeichnet, dass an den Endstücken (3) der Verbindungsmuffe (1) im Bereich zwischen den Eintrittsöffnungen Schlitze (9) vorgesehen sind zum Einführen und zugfesten Befestigen der Stegenden (13) der Mehrfachrohre (11).

7. Verbindungsmuffe nach Anspruch 6, dadurch gekennzeichnet, dass an den Endstücken (3) die Schlitze (9) durchquerende Verbindungselemente, vorzugsweise Spannstifte, vorgesehen sind, die bei eingeführten Mehrfachrohren (11) zur Bildung der zugfesten Befestigung deren Stege (13) durchdringen.

8. Verbindungsmuffe nach einem der Ansprüche 2 bis 7, dadurch gekennzeichnet, dass die Rohrstücke (2) beabstandet sind und zwischen sich Oeffnungen freilassen.

9. Mehrfachrohr in Verbindung mit einer Verbindungsmuffe nach einem der Ansprüche 1 bis 7, dadurch gekennzeichnet, dass jeweils benachbarte Einzelrohre (12) in ihrer Mittelebene durch in Längsrichtung verlaufende, steife Stege (13) verbunden und gemäss den Durchgängen (10) der Verbindungsmuffe (1) gegenseitig beabstandet sind, wobei die Stege (13) in Abständen Durchgänge (24) aufweisen.

10. Verfahren zum Verbinden zweier Mehrfachrohre nach Anspruch 9 mittels einer Verbindungsmuffe nach einem der Ansprüche 1 bis 8, dadurch gekennzeichnet, dass die Enden eines der Mehrfachrohre (11) bis wenig über die diesseitigen Dichtungsringe (6) in die Muffe eingeschoben und mit ihren Stegen (13) darin fixiert werden und dass die Enden des anderen Mehrfachrohrs (11) soweit eingeschoben werden und verschiebbar bleiben, derart, dass Rohrdilatationen durch Verschiebung dieser Rohrenden in der Verbindungsmuffe aufnehmbar sind.

11. Verfahren zum Verbinden zweier Mehrfachrohre nach Anspruch 10, dadurch gekennzeichnet, dass zum Einschieben der Rohrenden eine Zusammenziehvorrichtung (30) einerseits an einem Endstück (3) der Verbindungsmuffe und anderseits an einem Stegdurchgang (24) eines Mehrfachrohrs (11) angesetzt wird und mit der Zusammenziehvorrichtung eine ausreichende Zugkraft zum gleichzeitigen Einschieben aller Rohre des Mehrfachrohrs (11) in die Verbindungsmuffe (1) erzeugt wird.

**Claims**

1. Coupling sleeve of a synthetic material for providing multiple parallel pipe connections forming several tube-like separated passages (10), characterized in that two pipe-ends to be interconnected at each pipe connection are pushable into each passage (10), wherein a circumferential groove (6) with sealing ring (5) is arranged at both sides of each passage on its inner surface near the entry opening which sealing ring interacts with the outer surface of the pipes to be connected in a sealing manner.

2. Coupling sleeve according to claim 1, characterized in that each of the several passages (10) comprises a tubular piece (2), wherein the tubular pieces (2) are interconnected on each side by means of an end piece (3), which forms the entry openings at the corresponding sides, said openings being flush with the interior of the tubular pieces.

3. Coupling sleeve according to claim 2, characterized in that the circumferential groove (6) is arranged between the end of each tubular piece (2) and the corresponding end piece (3).

4. Coupling sleeve according to one of the claims 2 and 3, characterized in that the tubular pieces (2) and the end pieces (3) are provided as separately manufacturable, injection-molded pieces, wherein an engaging coupling (7) is provided on the end pieces for attaching the tubular pieces.

5. Coupling sleeve according to claims 3 and 4, characterized in that the sealing ring (5) is arranged near the engaging coupling (7) and provides a sealing between the tubular pieces (2) and the end pieces (3).

6. Coupling sleeve according to one of the preceding claims for coupling of multiple pipes (11), wherein neighbouring single pipes (12) of said multiple pipes are connected in their central plane by webs (13) extending in the longitudinal direction of the pipes, characterized in that slits (9) are provided at the end pieces (3) of the coupling sleeve (1) in the zone between the entry openings for insertion and pulling-proof attachment of the ends of the webs (13) of the multiple pipes (11).

7. Coupling sleeve according to claim 6, characterized in that connecting elements traversing the slits (9) are provided at the end pieces (3), preferably engaging pins, which are passing through the webs (13) of the inserted multiple pipes (11) for forming the pulling-proof connection.

8. Coupling sleeve according to one of the claims 2 to 7, characterized in that the tubular pieces (2) are spaced apart and are leaving openings between each other.

9. Multiple pipe in connection with a coupling sleeve according to one of the claims 1 to 7, characterized in that neighbouring single pipes (12) are connected in their central plane by rigid webs (13) extending in the longitudinal direction of the pipes, and are mutually spaced apart according to the passages (10) of the coupling sleeve (1), wherein the webs (13) comprise spaced apart openings (24).

10. Method for coupling of two multiple pipes according to claim 9 by means of a coupling sleeve according to one of the claims 1 to 8, characterized in that the ends of one of the multiple pipes (11) are pushed that far into the sleeve that they extend a little beyond the sealing rings (6) of this side and are fixed in it at their webs (13), and that the ends of the other multiple pipe (11) are pushed in that far and remain slidable such that dilatations of the pipes are absorbable by sliding of said ends of the pipe in the sleeve.

11. Method for coupling of two multiple pipes according to claim 10, characterized in that for pushing-in the ends of the tubes a contracting device is coupled to an end piece (3) of the sleeve on the one side and to an opening (24) in the web of a multiple tube (11) on the other side and a sufficient pulling force is generated by means of the contracting device for simultaneously pushing all pipes of the multiple pipe (11) into the sleeve (1).

**Revendications**

1. Manchon de connection en matière plastique comportant des passages (10) en forme de tuyau espacés les uns des autres, pour réaliser plusieurs conduites parallèles, caractérisé en ce que les extrémités à raccorder de deux tuyaux appartenant à une conduite peuvent être introduites dans chaque passage (10), une rainure périphérique (6) étant disposée des deux côtés au voisinage de l'embouchure de chaque passage et munie d'un joint annulaire (5) agencé pour coopérer hermétiquement avec la surface extérieure des tuyaux à raccorder.

2. Manchon selon la revendication 1, caractérisé en ce que chaque passage (10) comprend une section de tuyau (2), ces sections (2) étant réunies de chaque côté par une pièce terminale (3) formant une embouchure du côté correspondant et alignée avec l'intérieur de la section de tuyau.

3. Manchon selon la revendication 2, caractérisé en ce que la rainure périphérique (6) est placée entre l'extrémité de chaque section de tuyau (2) et la pièce terminale correspondante (3).

4. Manchon selon une des revendications 2 et 3, caractérisé en ce que les sections de tuyau (2) et les pièces terminales (3) sont des pièces pouvant être fabriquées séparément par injection, un accouplement à encliquetage (7) étant prévu pour la fixation des sections de tuyau aux pièces terminales.

5. Manchon selon les revendications 3 et 4, caractérisé en ce que le joint annulaire (5) est placé dans la région de l'accouplement à encliquetage (7) et forme un joint entre les sections de tuyau (2) et les pièces terminales (3).

6. Manchon selon une des revendications précédentes pour connecter des tuyauteries (11) dont les différents tuyaux (12) sont réunis dans leur plan médian par des attaches latérales (13) s'étendant en direction longitudinale des tuyaux, caractérisé en ce que des fentes (9) sont prévues dans les pièces terminales (3) du manchon (1) dans la région située entre les embouchures, pour y introduire les extrémités des attaches (13) des tuyauteries (11) et les y fixer de manière à résister à la traction.

7. Manchon selon la revendication 6, caractérisé en ce que des éléments connecteurs, de préférence des chevilles, traversant les fentes (9) sont prévus sur les pièces terminales (3), ces éléments traversant les attaches (13) pour résister à la traction une fois les tuyauteries (11) introduites.

8. Manchon selon une des revendications 2 à 7, caractérisé en ce que les sections de tuyau (2) sont placées à une certaine distance les unes des autres et laissent des ouvertures libres entre elles.

9. Tuyauterie multiple avec un manchon selon une des revendications 1 à 7, caractérisée en ce que des tuyaux individuels (12) voisins sont réunis dans leur plan médian par des attaches (13) longitudinales et rigides et qu'ils sont mutuellement espacés en fonction des passages (10) du manchon (1), les attaches (13) présentant des ouvertures (24) espacées.

10. Procédé pour réunir deux tuyauteries multiples selon la revendication 9 au moyen d'un manchon de connection selon une des revendications 1 à 8, caractérisé en ce que les extrémités d'une des tuyauteries multiples (11) sont introduites dans le manchon jusqu'à un peu au-delà des joints annulaires (6) situés du même côté, qu'elles sont fixées dans le manchon par leurs attaches (13), et que les extrémités de l'autre tuyauterie multiple (11) sont introduites à une certaine profondeur tout en restant déplaçable, de manière à ce que les dilatations des tuyaux puissent être compensées par déplacement de ces extrémités dans le manchon de connection.

11. Procédé pour réunir deux tuyauteries selon la revendication 10, caractérisé en ce qu'un dispositif de montage par traction (30) est engagé d'une part avec une pièce terminale (3) du manchon, et d'autre part avec une ouverture (24) d'une tuyauterie multiple (11), et qu'une force de traction suffisante pour enfoncer simultanément tous les tuyaux de la tuyauterie (11) dans le manchon (1) est exercée au moyen dudit dispositif de montage.

Fig 1

Fig. 2

Fig. 3

Fig. 4

Fig. 5

Fig. 6

Fig. 7

Fig. 8

EP 0 396 905 B1

Fig. 9

Fig. 10

Fig. 11